# EUROPEAN PATENT SPECIFICATION

(11) **EP 1 945 057 B1**
(45) Date of publication and mention of the grant of the patent: **06.04.2011**
(21) Application number: 06806387.4
(22) Date of filing: 19.10.2006
(51) Int. Cl.: A45D 26/00

(54) **PROCEDURE AND SYSTEM FOR DISPENSING DEPILATORY WAX IN A REGULATED MANNER FOR ITS IMMEDIATE APPLICATION**
VERFAHREN UND SYSTEM ZUR GEREGELTEN AUSGABE VON HAARENTFERNUNGSWACHS ZU SEINER UNMITTELBAREN ANWENDUNG
PROCEDURE ET SYSTEME DE DISTRIBUTION DE CIRE DEPILATOIRE DE MANIERE REGULEE EN VUE DE SON APPLICATION IMMEDIATE

(30) Priority: 07.11.2005 ES 200502698
(43) Date of publication of application: 23.07.2008
(73) Proprietor: Ceras Especiales Martinez de San Vicente, S.A., 08940 Cornella de Llobregat (ES)
(72) Inventor: MARTINEZ DE SAN VICENTE OLIVERAS, Luis, E-08940 Cornella de Llobregat (ES)
(74) Representative: Sugrañes Patentes y Marcas
(86) International application number: PCT/EP2006/010076
(87) International publication number: WO 2007/051526

(56) References cited:
- GB-A- 2 334 014
- US-A- 6 053 649
- US-A1- 2004 200 541

## Description

### Field of the invention

The invention relates to a procedure and system for dispensing depilatory wax in a regulated manner for its immediate application, and more particularly for successively supplying several refillable tanks of wax applicators in a clean and safe manner.

### Background of the invention

The melted wax applicators for hair removal that are currently known generally consist of a hand-holdable casing with a top opening, inside which is housed a container for depilatory wax to be applied to a user's skin in very fine films with the aid of an applicator roller, which is positioned over the mouth of the container, in the opening of the casing.

The wax container can consist of a heatable tank that is solidly joined to the casing, which must be refilled with new wax as the stored wax is applied to a user's skin. However, applicators that include this type of tanks are not very widely used, as the operation of refilling said tanks presents several problems.

Firstly, applicators of this type store and dispense warm wax, which flows when its temperature exceeds approximately 36°C, but the state of which at room temperature is too viscous to be poured from one recipient to another. For this reason, the wax must be heated before it is poured into the applicator tanks, meaning that it is necessary to have suitable heaters to heat the wax.

Secondly, the capacity of the applicator tanks is not very large, meaning that the quantity of wax that must be heated to fill the tank of a single applicator is also very small. Having to heat very small quantities of wax several times represents a significant waste of time and energy efficiency. Heating large quantities of wax to supply more than one tank at a time increases the energy efficiency of the operation, but it is only advantageous if several applicators are soon to be used for hair removal.

Thirdly, particularly during the operation of pouring the melted wax from the recipient that contains it into the applicator tanks, the wax must be handled with great care as any melted wax that spills out of the mouth of the tanks solidifies as it cools and soils the components of the applicators, such as the rotating application rollers, subsequently preventing these from functioning correctly.

For these reasons, it is more common to use applicators in which the wax is stored in single-use containers in the form of cartridges, which can be replaced by other full containers when the stored wax runs out. These cartridges allow users to replace the wax in a container once said wax has run out, changing the whole container or cartridge without soiling or coming into direct contact with the wax.

Although this system is, a priori, much cleaner than the system disclosed above, wherein the wax tanks are not replaceable and must be successively refilled with wax, it also presents certain drawbacks. These include the price of the empty containers or cartridges, which significantly affects the price of the container full of wax, the form in which it is sold. This particularly affects wax manufacturers, who have to supply the product in containers or cartridges that are suitably adapted to be inserted into the applicators.

For this purpose, the containers must be sufficiently rigid and must be capable of supporting the heat that is needed to heat the wax for the application thereof. In addition to the high cost of the containers, storing and transporting wax in small quantities in its respective containers also increases the price of the transport and storage operations per unit of wax.

Furthermore, the stored wax content of the cartridges is not totally usable, as a certain wastage of wax always remains stuck to the base and inner walls of the cartridges.

For all these reasons, it is particularly interesting to achieve an optimum procedure and system for dispensing wax in a controlled manner that are adapted for refilling the fixed tanks of the applicators cleanly and easily, which does not require the use of said replaceable containers or cartridges.

Document US 2004/0200541 discloses a wax dispenser that comprises tanks containing wax electrically heated by electrical resistances. This device is particularly designed for storing sufficient quantities of melted depilatory wax, of the hot wax type, to supply several containers for hair removal applications on more than one user.

The heat applied to the tanks is transmitted, by conduction, to the wax stored therein, so that it melts and becomes more fluid. A circuit connects a mouth in the base of the tanks to a corresponding valve element that allows the controlled dispensation of the desired quantity of melted hot wax. Although the device allows the controlled dispensation of wax, it does not solve some of the aforementioned problems. Specifically, although the device makes it possible to dispense wax stored in its tanks, it does not solve the problem of how to first put the wax into said tanks.

Moreover, the electrical resistances are positioned in such a way that they only directly heat a small portion of one of the side walls of the tanks, through which the heat is transmitted to the wax, therefore requiring a high energy consumption. The energy loss is also very high, as the resistances consume the same amount of energy regardless of the amount of wax stored in the tanks. It is obvious that when the tanks are practically empty, according to the device disclosed in US 2004/0200541 it would be necessary to provide less heat to melt the wax, which is not provided for according to the description of said document.

### Explanation of the invention

The procedure for dispensing depilatory wax, in a regulated manner for its immediate use, that is the object of the invention is essentially characterised in that it comprises the steps of positioning a container of depilatory wax in an inverted position, with at least one outlet opening for the wax, in such a way that said outlet opening is in the lowest part of the container; heating, the wax in the lowest part of the container close to the outlet opening thereof, at a temperature that is higher than that at which the wax melts so that the wax, by gravity, flows out of the container through the outlet; and regulating the quantity of wax to be dispensed, and in that.

the step of heating the wax in the area around the outlet opening of the container is performed by inserting a heating element that passes through the outlet opening of the container into the depilatory wax.

Another object of the invention is a system for the regulated dispensation of melted depilatory wax, in a melted state that is suitable for its application on a user's skin, which comprises a container which stores wax at room temperature in a practically solid state, with at least one outlet opening, the mouth of which is adapted for the melted wax to pass therethrough; and a dispenser device comprising a means of attachment of the container, which is adapted to receive the mouth of at least one container; at least one valve element that is suitable for dispensing viscous products; a means of piping the melted wax from the mouth of the plugged-in container to the entrance to the corresponding valve element; and a heating means provided in said means of attachment.

The system is characterized in that,- the means of attachment disposed in the dispenser device comprises a receptacle with an outer opening that is adapted to receive and house the mouth of the plugged-in container, and the heating means is disposed in a cavity of said receptacle extending outward beyond its outer opening.

According to another characteristic of the invention, the heating means is disposed essentially perpendicular to the plane of opening of the means of attachment and is adapted to be inserted into the container when the latter is plugged into said means of attachment.

According to a preferred embodiment, the heating means consists of a rod with a plurality of radially disposed flanges to increase the contact surface with the wax.

According to another variant of the system of the invention, said receptacle comprises a tubular upper portion with an inner seating and the means of attachment also comprises an elastic means that rests on the seating of the tubular portion of the receptacle, on which an adjusting ring rests to receive the support of the mouth of the container, it being possible for said ring to rest on said inner seating, fitting tightly, as the opening of the container rests thereon, exerting sufficient pressure to compress the elastic means on which said ring rests, thus allowing the melted wax to flow towards the base of the receptacle and through the central hole of the adjusting ring.

According to another variant of the invention, the means of attachment also comprises a sealing joint consisting of a deformable ring that rests on the seating of the tubular portion of the receptacle, upon which the adjusting ring rests under pressure when the elastic means is compressed.

According to another characteristic of the invention, the dispenser device has a perforating means that is adapted to provide the container plugged into the dispenser device with at least one ventilation hole.

In a preferred embodiment, the perforating means is disposed on a rotating body that is articulatedly joined to the dispenser device and can be moved from a receiving position A to an operational position B and vice versa, and the height of the container is adapted so that when the rotating body is in its receiving position and the opening of the container is resting on the adjusting ring, as the rotating body moves to its operational position, it exerts pressure on the base of the container and perforates it, and the container moves downwards, dragging the adjusting ring with it, thereby compressing the elastic means and ensuring that the adjusting ring rests on the seating of the tubular portion of the receptacle of the means of attachment.

According to a variant of the system, the entrance to one of the valve elements is situated at a higher level than that of the corresponding means of attachment of the dispenser device to which it is connected, and the dispenser device has a pump to propel the melted wax from the area around the means of attachment to said entrance to the valve elements.

According to another variant of the invention, the entrance to one of the valve elements is situated at a lower level than that of the corresponding means of attachment of the dispenser device to which it is connected.

According to another characteristic of the system of the invention, the dispenser device has a collector tray that is adapted to collect any melted wax that spills out of the valve element and to pour it into the receptacle of the means of attachment through its outer opening.

### Brief description of the drawings

Different embodiments of a system for performing the method of the invention are illustrated in the attached drawings by way of a non-limiting example. In said drawings:
Fig. 1 is a schematic drawing of one variant of the system that is the object of the invention;
Fig. 2 is a schematic drawing of another variant of the system of the invention;
Fig. 3 is a perspective view of a dispenser device and a container according to the variant shown in Fig. 1 of the system of the invention;
Figs. 4a and 4b are sectional views of the dispenser device and the container shown in Fig. 3, in a plugged-in position and in an operational position, respectively;
Figs. 5a and 5b are detailed views of areas I and II of Figs. 4a and 4b, respectively;
Fig. 6 is a perspective view of the adjusting ring of the means of attachment of the dispenser device shown in Figs. 4a, 4b, 5a and 5b; and
Fig. 7 is a perspective view of the dispenser device and the container shown in Fig. 3, both plugged in and in an operational position, during the wax dispensing operation for filling the tank of a wax applicator device.

### Detailed description of the drawings

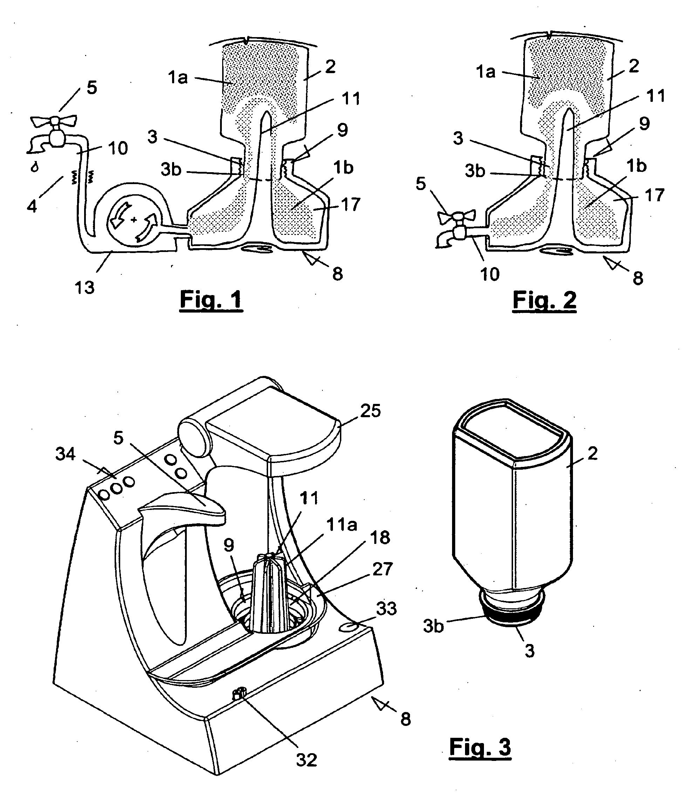

Figs. 1 and 2 schematically show two variants of a system that makes it possible to perform a procedure for dispensing depilatory wax in a regulated manner. Said procedure makes it possible to dispense depilatory wax for its immediate application, sufficiently fluidised and hot, using wax that was originally stored in a container at room temperature and in a state that was too viscous to be poured or applied directly to a user's skin, all of which avoids the need for direct contact with the wax, the need to pour the wax from one container to another or to heat the wax container to fluidise said wax.

The system shown in Figs. 1 and 2 consists of a container 2 for wax 1a, with an outlet opening 3 for the stored wax, and a dispenser device 8 comprising a means of attachment 9 that is adapted to receive the mouth 3b of the outlet opening 3 of the container 2. This means of attachment has a heating means 11 that is adapted to be inserted into the container 2 when it is plugged into the means of attachment 9 of the dispenser device 8.

As is shown in Figs. 1 and 2, the container 2 is attached to the dispenser device 8 in an inverted position, in such a way that the wax in the container 2, which melts and fluidises as a result of the heat supplied by the heating means 11, falls due to gravity and flows out of the container 2 through the mouth 3b of the outlet 3. The space inside the container 2 that was occupied by the melted wax 1b that flows out of said container 2 is gradually occupied by wax 1 a that is still in a viscous state in the container 2, which then occupies the space around the heating means 11, causing it to fluidise and flow out of said container 2, and this occurs successively until the container 2 is completely empty.

The melted wax 1b that flows out of the container 2 is collected in a receptacle 17 with which the means of attachment 9 is provided, from which it is taken through a piping means 10 to a valve element 5 that can be actuated by a user, by means of which it is dispensed in a regulated manner from the dispenser device 8.

In the example shown in Fig. 1, the valve element 5 is disposed at a higher level than the base of the receptacle 17, for which the dispenser device 8 also has a pump 13 to propel the melted wax 1b from the receptacle 17 to the entrance to the valve element 5. In this case the piping means 10 will be heated in order to maintain the melted wax 1b in optimum conditions for its subsequent dispensation and use. Fig. 1 shows a set of electrical resistances 4 to illustrate said characteristic.

However, in the example shown in Fig. 2, the valve element 5 is disposed at a lower level than the base of the receptacle 17, therefore not requiring a pump to propel the melted wax 1b, which can be dispensed, due to gravity, through the valve element 5 that is connected directly to the receptacle 17.

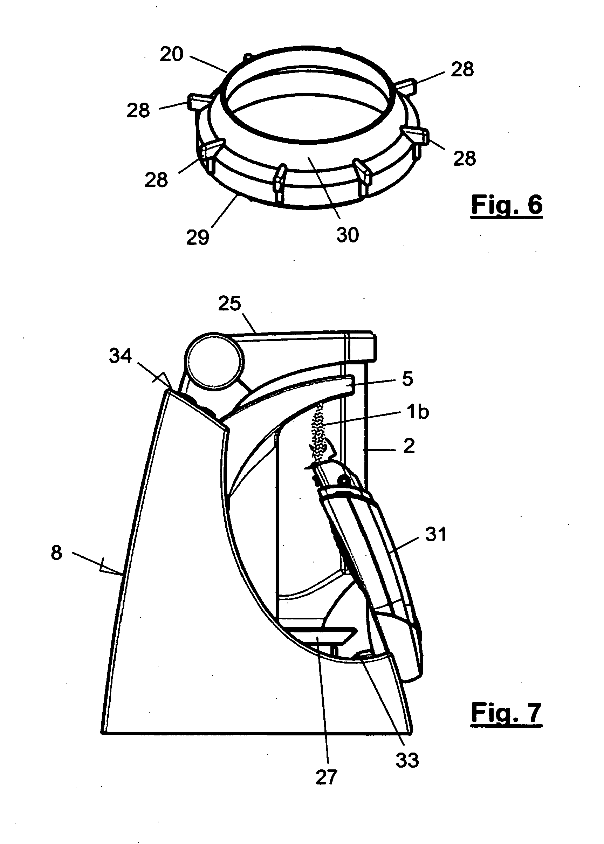

The dispenser device 8 is adapted, as will be explained below, to support a depilatory wax applicator 31 (see Fig. 7) in a stable position, in such a way that the mouth of the tank of said applicator is disposed immediately below the outlet of the valve element 5, meaning that it can be refilled with the melted wax 1b that was originally stored in the container 2.

The containers 2 in which the wax is stored should have a capacity of about four litres, meaning that one container 2 can refill several conventional applicator tanks.

Fig. 3 shows a perspective view of a dispenser device 8 and a container 2 that can be attached to one another, according to a variant of the system schematically shown in Fig. 1. In said Fig. 3 it is possible to observe the above-described elements of the device and, specifically, the outer opening 18 of the receptacle of the means of attachment 9, which will receive and house the mouth 3b of the wax outlet 3 of the container 2, the heating means 11 and the valve element 5.

As regards the heating means 11, in the example shown in Fig. 3 it extends perpendicular to the plane of the outer opening 18 of the means of attachment 9, and consists of a rod with a plurality of radially disposed flanges 11a, the purpose of which is to increase the contact surface with the wax inside the container once it is plugged into the dispenser device 8.

It can be observed in Fig. 3 that the valve element 5 is disposed laterally in the dispenser device 8, so that it does not obstruct the operations of attaching and detaching the container 2 to and from said dispenser device 8. A means of support 32 can be seen on the lower part of said dispenser device 8, which is suitable for firmly holding a wax applicator (not shown) and for supplying it with an electric current.

The dispenser device 8 also comprises a collector tray 27, for collecting any melted wax 1b that might spill out of the valve element 5 when the wax applicator (see Fig. 7) is not in its filling position. The collector tray 27 is slightly inclined towards the outer opening 18 of the means of attachment 9 and extends from the area disposed below the outlet of the valve element 5 to said outer opening 18, which it overhangs in order to pour into it the melted wax 1b that it collects and channels. Although the valve element 5 has an anti-drip device, on closing off the flow of melted wax 1b, and due to its viscosity, a certain amount of the product can remain stuck to the outlet of the valve element 5, which can be removed from said valve element once the applicator 31 has been removed from its filling position. When this occurs, the collector tray 27 prevents the melted wax 1b removed from the valve element 5 from soiling the dispenser device 8.

The device shown in Fig. 3 also has a rotating body 25, the purpose of which, as will be explain below, is to perforate the base of the container 2 in order to allow air to enter it as said container 2 empties, and to ensure a correct attachment between the container 2 and the dispenser device 8.

To attach the container 2 to the dispenser device 8, the procedure is as follows:

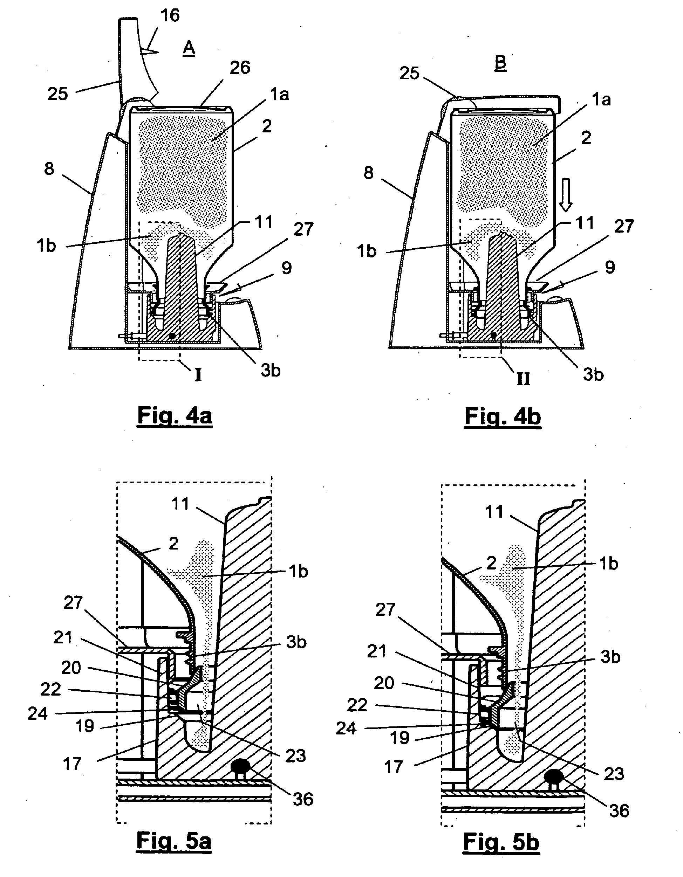

First, the rotating body 25 is positioned in the receiving position A, as shown in Fig. 4a, and the container 2 (the seal having been removed from its opening 3, should this be the case) is inverted, inserting its mouth 3b into the receptacle 17 through its outer opening 18 until it is resting inside said receptacle. The rotating body 25 is then actuated, rotating it towards the position shown in Fig. 4b, thus causing the base 26 of the container 2 to be perforated as it is punctured by a perforating means 16 disposed for this purpose on the underside of the rotating body 25. Said puncturing operation provides the container 2 plugged into the dispenser device 8 with at least one ventilation hole through which air can penetrate into said container as it empties.

As the rotating body 25 moves from the receiving position A into the operational position B, as shown in Fig. 4b, said rotating body 25 exerts pressure on the base 26 of the container 2, moving it in the direction shown by the arrow in Fig. 4b and ensuring a tight attachment between the mouth 3b of the container 2 and the dispenser device 8.

Figs. 5a and 5b are detailed sectional drawings of areas I and II of Figs. 4a and 4b, respectively. In said Figs. 5a and 5b it is possible to observe that the receptacle 17 of the means of attachment 9 of the dispenser device 8 comprises a tubular upper portion 21 with an inner seating 19 on which rest a sealing joint 24, consisting of a deformable plastic ring, and an elastic means, consisting of a compression spring 22. An adjusting ring 20 rests on said spring 22, configured on its upper side to receive the mouth 3b of the container 2 and on its lower side in such a way that its lower edge 29 (see Fig. 6) can rest, under pressure, against the sealing joint 24.

It can also be observed that the receptacle 17 and the heating means 11 consist of a single body, preferably made of a metal material, and that the heat source of the heating means 11 is disposed at the base of the rod that extends outward from said receptacle 17, said heat source consisting of a circular PTC type thermistor 36. The storage capacity of the receptacle 17 must be sufficient to supply the tank of at least one wax applicator 31 when all the wax has been extracted from the plugged-in container 2.

The above-described assembly is adapted in such a way that the adjusting ring 20 does not rest on the sealing joint 24 if the latter is not pushed down. Fig. 5a effectively shows that when the rotating body 25 is not in the operational position B, the adjusting ring 20 is not in contact with the sealing joint 24, whilst in Fig. 5b it can be seen that the container 2 has moved downward, in turn pushing down on the adjusting ring 20 and compressing the spring 22, whereby said adjusting ring 20 rests on said sealing joint 24. When this occurs, the melted wax 1b can only pass through the central hole 23 of said adjusting ring 20 towards the base of the receptacle 17.

When the adjusting ring is in the position shown in Fig. 5a, the wax from the collector tray 27 can pass between said adjusting ring 20 and the inner seating 19, thereby flowing into the receptacle 17. It is therefore not necessary for the overhang of the collector tray 27 to extend as far as the central area of the outer opening 18 of the receptacle 17 in order to pour the melted wax 1b into the receptacle 17 through the central hole 23 of the adjusting ring 20, which would undoubtedly make it more difficult to plug the container 2 into the means of attachment 9.

Fig. 6 shows a detailed drawing of an embodiment of the adjusting ring 20. In said Fig. 6 it can be observed that the upper half of the adjusting ring 20 has a truncated cone-shaped portion 30 for receiving the mouth 3b of the container 2. The intermediate portion of the adjusting ring 20 has a plurality of projections 28, regularly disposed around its outer profile, by means of which the adjusting ring 20 rests and presses on the spring 22 as it moves downward.

Fig. 7 shows the container 2 and the dispenser device 8 of Fig. 3 in operation, i.e. with the container 2 plugged into the dispenser device 8 and the rotating body 25 in the operational position B. In said Fig. 7 it can be observed that the valve element 5 is dispensing melted wax 1b, which falls into a wax applicator 31 to fill its tank.

Advantageously, it is anticipated that the container 2 of the system according to the invention should be at least partially transparent, so that its content is visible from the outside and the quantity of wax that remains therein is known at all times. It is also particularly interesting for the collector tray 27 to be made of a metal material such as aluminium, which is a good heat conductor, so that the melted wax 1b that it collects remains in the most fluid state possible. Although not shown here, it is anticipated that the collector tray 27 should have a number of inflections to serve as supports for wax applicator rollers, of the type used in wax applicators for applying a film of wax to a user's skin, in order to keep them at an optimum working temperature.

The procedure of the invention and the system for putting it into practice make it possible to store manufactured depilatory wax in bulk, putting it into large containers 2, which reduces the subsequent storage and distribution costs for the volume of product. The containers 2 are disposable, as they are perforated during the operation of emptying the dispenser device 8, and their cost is inexpensive because they are not required to comply with any particular specifications in terms of having to support high temperatures, as the containers 2 are not directly heated.

For the correct operation of the dispenser device 8 shown in Figs. 3 and 7, it has a control module (not shown) that comprises an electric switch that controls the heating means 11 and/or the pump 13. For safety reasons, if the container 2 is not correctly plugged into the dispenser device 8, i.e. if the adjusting ring 20 is not in contact, under pressure, with the sealing joint 24, the thermistor 36 remains switched off and does not emit heat, meaning that the wax in the container 2 will not melt and will not be extracted from said container.

Furthermore, the dispenser device 8 has a number of indicator pilot lights 34 and a push button 33 that actuates the valve element 5 and the pump 13 to dispense the melted wax 1b. If the wax contained in the receptacle 17 or in the piping means 10 is not sufficiently hot, a pilot light comes on in a colour indicating that the dispenser device 8 is waiting for the wax to reach the correct temperature and the pump 13 remains off. Whilst this occurs, an electric current is made to flow through the resistances 4 (which can also consist of PTC thermistors), which heat the melted wax 1b, thus increasing its temperature. When a temperature sensor detects that it has reached a sufficient value, another pilot light comes on in a different colour to the first, indicating that the wax is sufficiently heated, and while the push button 33 is held down, the pump 13 will propel the melted wax 1b towards the valve element 5, through which the melted wax 1b will be dispensed from the device.

## Claims

1. **Procedure** for dispensing depilatory wax, in a regulated manner for its immediate application, that comprises the following steps:
- positioning, in an inverted position, a container (2) of depilatory wax (1a) with at least one outlet opening (3) for the wax, in such a way that said outlet opening is in the lowest part of the container;
- heating the wax in the lowest part of the container (2) around the outlet opening (3) thereof, at a temperature that is higher than that at which the wax melts so that the wax, by gravity, flows out of the container (2) through the outlet opening (3); and
- regulating the quantity of wax to be dispensed, **characterised in that** the step of heating the wax contained in the area around the outlet opening (3) of the container (2) is performed by inserting a heating element (11) that passes through the outlet opening of the container (2) into the depilatory wax (1a).

2. **System** for the regulated dispensation of melted depilatory wax (1b), in a melted state that is suitable for its application on a user's skin, that comprises:
- a container (2) which stores wax (1a) at room temperature in a practically solid state, with at least one outlet opening (3), the mouth (3b) of which is adapted for the melted wax (1b) to pass therethrough; and
- a dispenser device (8) comprising a means of attachment (9) of the container (2) which is adapted to receive the mouth (3b) of at least one container (2); at least one valve element (5) that is suitable for dispensing viscous products; a means of piping (10) the melted wax (1b) from the mouth of the plugged-in container (2) to the entrance (51) to the corresponding valve element; and a heating means (11) provided in said means of attachment (9),
wherein the means of attachment (9) comprises a receptacle (17) with an outer opening (18) **characterised in that** is adapted to receive and house the mouth (3b) of the plugged-in container (2), and **in that** the heating means (11) is disposed in a cavity of said receptacle (17) , extending outward beyond its outer opening (18) such that it is inserted into the container (2) when it is plugged into the means of attachment (9) of the dispenser device (8).

3. System according to claim 2, **characterised in that** the heating means (11) is disposed essentially perpendicular to the plane of opening of the means of attachment (9) and is adapted to be inserted into the container (2) when it is plugged into said means of attachment.

4. System according to claim 3, **characterised in that** the heating means (11) consists of a rod with a plurality of radially disposed flanges (11a) to increase the contact surface with the wax (1a).

5. System according to claims 2 to 4, **characterised in that** said receptacle (17) comprises a tubular upper portion (21) with an inner seating (19) and **in that** the means of attachment (9) also comprises an elastic means (22) that rests on the seating of the tubular portion of the receptacle, on which an adjustment ring (20) rests to receive the support of the mouth (3b) of the container (2), it being possible for said ring to rest on said inner seating, fitting tightly, as the opening of the container rests thereon, exerting sufficient pressure to compress the elastic means on which said ring rests, thus allowing the melted wax (1b) to flow towards the base of the receptacle and through the central hole (23) of the adjustment ring.

6. System according to claim 5, **characterised in that** the means of attachment (9) also comprises a sealing joint (24) consisting of a deformable ring that rests on the seating (19) of the tubular portion (21) of the receptacle (17), upon which the adjustment ring (20) rests under pressure when the elastic means (22) is compressed.

7. System according to claim 2, **characterised in that** the dispenser device (8) has a perforating means (16) that is adapted to provide the container (2) plugged into the dispenser device with at least one ventilation hole (6).

8. System according to claims 5 and 7, **characterised in that** the perforating means (16) is disposed on a rotating body (25) that is articulatedly joined to the dispenser device (8) and can be moved from a receiving position A to an operational position B and vice versa, and **in that** the height of the container (2) is adapted so that when the rotating body is in its receiving position and the mouth (3b) of the container is resting on the adjusting ring (20), as the rotating body moves to its operational position, it exerts pressure on the base (26) of the container and perforates it, and the container moves downwards, dragging the adjusting ring with it, thereby compressing the elastic means (22) and ensuring that the adjusting ring rests against the seating (19) of the tubular portion (21) of the receptacle (17) of the means of attachment (9).

9. System according to claims 2 to 8, **characterised in that** the entrance (51) to one of the valve elements (5) is situated at a higher level than that of the corresponding means of attachment (9) of the dispenser device (8) whereto it is connected, and the dispenser device has a pump (13) to propel the melted wax (1b) from the area around the means of attachment to said entrance (51) to the valve elements.

10. System according to claims 2 to 8, **characterised in that** the entrance (51) to one of the valve elements (5) is situated at a lower level than that of the corresponding means of attachment (9) of the dispenser device (8) to which it is connected.

11. System according to claims 2 to 9, **characterised in that** the dispenser device (8) has a collector tray (27) that is adapted to collect any melted wax (1b) that spills out of the valve element (5) and to channel it into the receptacle (17) of the means of attachment (9) through its outer opening (18).

## Patentansprüche

1. Verfahren zur Ausgabe von Enthaarungswachs in geregelter Weise für seine direkte Auftragung, das folgende Schritte umfasst:
- Anbringen, in einer umgekehrten Position, eines Behälters (2) von Enthaarungswachs (1a) mit zumindest einem Auslassloch (3) für das Wachs, so dass sich das genannte Auslassloch im untersten Teil des Behälters befindet;
- Erwärmen des Wachs in dem untersten Teil des Behälters (2) um das Auslassloch (3) desselben herum auf eine Temperatur, die größer als diejenige ist, bei der das Wachs schmilzt, so dass das Wachs, durch die Schwerkraft, aus dem Behälter (2) durch das Auslassloch (3) rausfließt; und
- Regeln der Wachsmenge, die ausgegeben werden soll, **dadurch gekennzeichnet, dass** der Schritt des Erwärmens des Wachses, das im Bereich um das Auslassloch (3) des Behälters (2) herum enthalten ist, durchgeführt wird, indem ein durch das Auslassloch des Behälters (2) durchgehendes Erwärmungselement (11) in dem Enthaarungswachs (1a) eingeführt wird.

2. System für die geregelte Ausgabe von geschmolzenem Enthaarungswachs (1b) in einem geschmolzenem Zustand, welches dazu geeignet ist, auf die Haut eines Verbrauchers angebracht zu werden, das Folgendes umfasst:
- einen Behälter (2), der Wachs (1a) bei Raumtemperatur in einem praktisch festem Zustand lagert, mit zumindest einem Auslassloch (3), dessen Öffnung (3b) für den Durchgang des geschmolzenen Wachs (1b) durch dieselbe angepasst ist; und
- eine Ausgabevorrichtung (8), die Kopplungsmittel (9) des Behälters (2) umfasst, die dazu angepasst sind, die Öffnung (3b) von zumindest einem Behälter (2) aufzunehmen; zumindest ein Ventilelement (5), das zur Ausgabe viskoser Produkte geeignet ist; Mittel, um das geschmolzene Wachs (1b) von der Öffnung des eingesteckten Behälters (2) bis zum Eingang (51) zum entsprechenden Ventilelement zu leiten (10); und Erwärmungsmittel (11), die in dem genannten Kopplungsmittel (9) vorgesehen sind,
wobei die Kopplungsmittel (9) eine Aufnahme (17) mit einem äußeren Loch (18) umfassen, **dadurch gekennzeichnet, dass** sie dazu angepasst ist, die Öffnung (3b) des eingesteckten Behälters (2) aufzunehmen und zu lagern, und dass die Erwärmungsmittel (11) in einer Aussparung der genannten Aufnahme (17) angeordnet sind, wobei sie sich nach außen über sein äußeres Loch (18) hinweg erstrecken, so dass sie in den Behälter (2) eingeführt werden, wenn sie in die Kopplungsmittel (9) der Ausgabevorrichtung (8) eingesteckt werden.

3. System nach Anspruch 2, **dadurch gekennzeichnet, dass** die Erwärmungsmittel (11) wesentlich senkrecht zur Öffnungsebene der Kopplungsmittel (9) angeordnet sind und dazu angepasst sind, in den Behälter (2) eingeführt zu werden, wenn sie in die genannte Kopplungsmittel eingesteckt werden.

4. System nach Anspruch 3, **dadurch gekennzeichnet, dass** die Erwärmungsmittel (11) aus einem Stab mit einer Mehrzahl von radial angeordneten Flanschen (11a) bestehen, um die Kontaktfläche mit dem Wachs (1a) zu vergrößern.

5. System nach den Ansprüchen 2 bis 4, **dadurch gekennzeichnet, dass** die genannte Aufnahme (17) ein rohrförmiges Oberteil (21) mit einer inneren Sitzfläche (19) umfasst und dass die Kopplungsmittel (9) ebenso elastische Mittel (22) umfassen, die auf die Sitzfläche des rohrförmigen Teils der Aufnahme aufliegen, auf denen ein Einstellring (20) aufliegt, um die Abstützung der Öffnung (3b) des Behälters zu erhalten, wobei es möglich ist, dass der genannte Ring mit dichter Anpassung auf der genannten inneren Sitzfläche aufliegt, wenn das Loch des Behälters darüber aufliegt, wobei genug Druck ausgeübt wird, um die elastische Mittel, auf denen der genannte Ring aufliegt, zu komprimieren, wobei ermöglicht wird, dass das geschmolzene Wachs (1b) zum Boden des Behälters hin und durch die zentrale Bohrung (23) des Einstellrings fließt.

6. System nach Anspruch 5, **dadurch gekennzeichnet, dass** die Kopplungsmittel (9) ebenso eine Dichtungsfuge (24) umfassen, die aus einem verformbaren Ring besteht, der auf die Sitzfläche (19) des rohrförmigen Teils (21) der Aufnahme (17) aufliegt, auf dem der Einstellring (20) unter Druck aufliegt, wenn die elastische Mittel (22) komprimiert werden.

7. System nach Anspruch 2, **dadurch gekennzeichnet, dass** die Ausgabevorrichtung (8) Perforiermittel (16) aufweist, die dazu angepasst sind, den in der Ausgabevorrichtung eingesteckten Behälter (2) mit zumindest einer Belüftungsbohrung (6) zu versehen.

8. System nach den Ansprüchen 5 und 7, **dadurch gekennzeichnet, dass** die Perforiermittel (16) auf einem Drehkörper (25) angeordnet sind, der gelenkig mit der Ausgabevorrichtung (8) verbunden ist und der von einer Aufnahmeposition A aus bis zu einer operativen Position B und umgekehrt bewegt werden kann, und dass die Höhe des Behälters (2) so angepasst ist, dass wenn sich der Drehkörper in seiner Aufnahmeposition befindet und die Öffnung (3b) des Behälters auf dem Einstellring (20) aufliegt, mit der Bewegung des Drehkörpers zu seiner operativen Position, dieser auf den Boden (26) des Behälters Druck ausübt und diesen perforiert, und der Behälter sich nach unten bewegt, unter Mitnahme des Einstellrings mit diesem, wobei die elastische Mittel (22) komprimiert werden und sichergestellt wird, dass der Einstellring gegen die Sitzfläche (19) des rohrförmigen Teils (21) der Aufnahme (17) der Kopplungsmittel (9) aufliegt.

9. System nach den Ansprüchen 2 bis 8, **dadurch gekennzeichnet, dass** sich der Eingang (51) zu einem der Ventilelemente (5) auf einem höheren Niveau als der der entsprechenden Kopplungsmittel (9) der Ausgabevorrichtung (8) mit der sie angeschlossen sind, befindet, und die Ausgabevorrichtung weist eine Pumpe (13) auf, um das geschmolzene Wachs (1b) von dem Bereich um die Kopplungsmittel herum zum genannten Eingang (51) zu den Ventilelementen hin zu treiben.

10. System nach den Ansprüchen 2 bis 8, **dadurch gekennzeichnet, dass** sich der Eingang (51) zu einem der Ventilelemente (5) auf einem niedrigeren Niveau als der der entsprechenden Kopplungsmittel (9) der Ausgabevorrichtung (8) mit der sie angeschlossen sind, befindet.

11. System nach den Ansprüchen 2 bis 9, **dadurch gekennzeichnet, dass** die Ausgabevorrichtung (8) einen Auffangbehälter (27) aufweist, der dazu angepasst ist, das geschmolzene Wachs (1b) aufzufangen, welches aus dem Ventilelement (5) ausläuft und dieses ins Innere der Aufnahme (17) der Kopplungsmittel (9) durch sein äußeres Loch (18) zu leiten.

## Revendications

1. Procédé de distribution de cire épilatoire, d'une manière régulée pour son application immédiate, qui comprend les étapes suivantes:
- positionnement, dans une position inversée, d'un conteneur (2) de cire épilatoire (1a) avec au moins une ouverture de sortie (3) pour la cire, de telle manière que ladite ouverture de sortie se trouve dans la partie plus basse du conteneur;
- réchauffement de la cire dans la partie la plus basse du conteneur (2) autour de l'ouverture de sortie (3) de celui-ci, a une température qui est supérieure à celle à laquelle la cire de fond, de manière que la cire, par gravité, s'écoule en dehors du conteneur (2) à travers l'ouverture de sortie (3); et
- réglage de la quantité de cire à dispenser, **caractérisé en ce que** l'étape de réchauffement de la cire contenue dans la zone autour de l'ouverture de sortie (3) du conteneur (2) est réalisée en insérant un élément de réchauffement (11) qui passe à travers de l'ouverture de sortie du conteneur (2) dans la cire épilatoire (1a)

2. Système de distribution réglée de cire épilatoire fondue (1b), dans un état fondu qui est approprié pour son application sur la peau d'un utilisateur, qui comprend:
- un conteneur (2) qui stocke la cire (1a) a température ambiante dans un état pratiquement solide, avec au moins une ouverture de sortie (3), l'embouchure (3b) de laquelle est adaptée pour que la cire fondue (1b) passe à travers celle-ci; et
- un dispositif de distribution (8) comprenant des moyens de fixation (9) du conteneur (2) qui sont adaptés pour recevoir l'embouchure (3b) d'au moins un conteneur (2); au moins un élément de soupape (5) qui est approprié pour dispenser des produits visqueux; des moyens de canalisation (10) de la cire fondue (1b) à partir de l'embouchure du conteneur (2) introduit vers l'entrée (51) à l'élément de soupape correspondant; et des moyens de réchauffement (11) prévus dans lesdits moyens de fixation (9),
dans lequel les moyens de fixation (9) comprennent un réceptacle (17) avec une ouverture extérieure (18), **caractérisé en ce qu'**il est adapté pour recevoir et loger l'embouchure (3b) du conteneur (2) introduit, et **en ce que** les moyens de réchauffement (11) sont disposés dans une cavité dudit réceptacle (17), s'étendant vers l'extérieur au-delà de son ouverture extérieure (18) de manière que qu'il s'insère dans le conteneur (2) lorsque qu'il est introduit dans les moyens de fixation (9) du dispositif de distribution (8).

3. Système selon la revendication 2, **caractérisé en ce que** les moyens de réchauffement (11) sont disposés essentiellement perpendiculaires au plan d'ouverture des moyens de fixation (9) et s'adaptent pour s'insérer dans le conteneur (2) lorsqu'il est introduit dans lesdits moyens de fixation.

4. Système selon la revendication 3, **caractérisé en ce que** les moyens de réchauffement (11) consistent en une tringle avec une pluralité de rebords disposés radialement (11a) pour augmenter la surface de contact avec la cire (1a).

5. Système selon les revendications 2 à 4, **caractérisé en ce que** ledit réceptacle (17) comprend une partie supérieure tubulaire (21) avec un siège intérieur (19) et **en ce que** les moyens de fixation (9) comprennent aussi des moyens élastiques (22) qui reposent sur le siège de la partie tubulaire du réceptacle, sur lesquels une bague d'ajustage (20) repose pour recevoir le support de l'embouchure (3b) du conteneur (2), en étant possible que ladite bague repose sur ledit siège intérieur, fermement serrée, lorsque l'ouverture du conteneur repose sur celle-ci, en exerçant une pression suffisante pour comprimer les moyens élastiques sur lesquels repose ladite bague, en permettant ainsi que la cire fondue (1b) s'écoule vers la base du réceptacle et à travers le trou central (23) de la bague d'ajustage.

6. Système selon la revendication 5, **caractérisé en ce que** les moyens de fixation (9) comprennent, également, un joint d'étanchéité (24) consistant en une bague déformable qui repose sur le siège (19) de la partie tubulaire (21) du réceptacle (17), sur laquelle la bague d'ajustage (20) repose sous pression lorsque les moyens élastiques (22) sont comprimés.

7. Système selon la revendication 2, **caractérisé en ce que** le dispositif de distribution (8) a des moyens de perforation (16) qui sont adaptés pour fournir au conteneur (2) introduit dans le dispositif de distribution au moins un trou de ventilation (6).

8. Système selon les revendications 5 et 7, **caractérisé en ce que** les moyens de perforation (16) sont disposés sur un corps rotatoire (25) qui est uni de manière articulée au dispositif de distribution (8) et peut se déplacer d'une position de réception A à une position opérationnelle B et vice-versa, et **en ce que** la hauteur du conteneur (2) est adaptée de manière que lorsque le corps rotatoire se trouve à sa position de réception et l'embouchure (3b) du conteneur repose sur la bague d'ajustage (20), à mesure que le corps rotatoire se déplace vers sa position opérationnelle, il exerce de la pression sur la base (26) du conteneur et le perfore, et le conteneur se déplace vers le bas, en entraînant la bague d'ajustage avec lui, en comprimant de la sorte les moyens élastiques (22) et assurant que la bague d'ajustage repose contre le siège (19) de la partie tubulaire (21) du réceptacle (17) des moyens de fixation (9).

9. Système selon les revendications 2 à 8, **caractérisé en ce que** l'entrée (51) à un des éléments de soupape (5) est située à un niveau plus élevé que celui des correspondants moyens de fixation (9) du dispositif de distribution (8) auquel ils sont connectés, et le dispositif de distribution a une pompe (13) pour impulser la cire fondue (1b) à partir de la zone autour des moyens de fixation vers ladite entrée (51) aux éléments de soupape.

10. Système selon les revendications 2 à 8, **caractérisé en ce que** l'entrée (51) à un des éléments de soupape (5) est située à un niveau inférieur à celui des correspondants moyens de fixation (9) du dispositif de distribution (8) auquel ils sont connectés.

11. Système selon les revendications 2 à 9, **caractérisé en ce que** le dispositif de distribution (8) a un plateau collecteur (27) qui est adapté pour recueillir de la cire fondue (1b) que se déborde de l'élément de soupape (5) et pour la canaliser vers le réceptacle (17) des moyens de fixation (9) à travers son ouverture extérieure (18).
